(19) Europäisches Patentamt

European Patent Office

Office européen des brevets

(11) Veröffentlichungsnummer: **0 221 839 B1**

(12)

# EUROPÄISCHE PATENTSCHRIFT

(45) Veröffentlichungstag der Patentschrift: **04.03.92**

(21) Anmeldenummer: **86730164.0**

(22) Anmeldetag: **20.10.86**

(51) Int. Cl.⁵: **H02B  1/26**

(54) **Leistungsschalter mit einer frontseitigen Öffnung eines Isolierstoffgehäuses und einer Leiterplatte.**

(30) Priorität: **08.11.85 US 796542**

(43) Veröffentlichungstag der Anmeldung:
**13.05.87 Patentblatt  87/20**

(45) Bekanntmachung des Hinweises auf die
Patenterteilung:
**04.03.92 Patentblatt  92/10**

(84) Benannte Vertragsstaaten:
**DE FR GB IT**

(56) Entgegenhaltungen:
**GB-A- 2 071 915**
**US-A- 3 761 776**
**US-A- 4 209 817**

(73) Patentinhaber: **SIEMENS AKTIENGESELL-**
**SCHAFT**
**Wittelsbacherplatz 2**
**W-8000 München 2(DE)**

(72) Erfinder: **May, William E.**
**539 Maplewood Drive**
**Laurenceville, GA 30245(US)**
Erfinder: **McColloch, Rex, Jr.**
**4307 Willington Hills Lane**
**Snellville, GA 30278(US)**
Erfinder: **King, William A.**
**5845 Shadow-Rock Drive**
**Lithonia, GA 30058(US)**

## Beschreibung

Die Erfindung betrifft einen Leistungsschalter mit einem Isolierstoffgehäuse und einer an einer Frontseite des Gehäuses angeordneten Öffnung, durch die eine Leiterplatte zugänglich ist, wobei einander gegenüberliegende Begrenzungsflächen der Öffnung mit je einer Ausnehmung zur Aufnahme der Leiterplatte versehen und in den Begrenzungsflächen der Öffnung in paralleler Anordnung zu den Ausnehmungen weitere Ausnehmungen zur Aufnahme einer Deckplatte angeordnet sind und wobei ferner eine Schutzplatte oberhalb der Deckplatte in zusätzlichen parallel zu den Ausnehmungen angeordneten Ausnehmungen eingesetzt ist.

Ein Leistungsschalter dieser Art ist durch die US-A-4 209 817 bekannt geworden. Die Leiterplatte ist hierbei Bestandteil eines elektronischen Auslösers, dessen Einstellorgane durch die frontseitige Öffnung des Isolierstoffgehäuses zugänglich sind. Die Anschlußklemmen für Hilfsgeräte, z. B. einen Summenstromwandler, sind gesondert von der Leiterplatte angeordnet und gleichfalls an der Frontseite des Gehäuses zugänglich. Durch die offene Anordnung sind jedoch zusätzliche Vorkehrungen für den Berührungsschutz erforderlich. Ferner müssen die anzuschließenden Leitungen in geeigneter Weise gesichert werden, um eine Lösung oder Beschädigung zu verhindern.

Bei einer anderen bekannten Anordnung von Anschlußklemmen für Hilfsgeräte nach der US-A-4 300 110 befinden sich die Anschlußklemmen auf der Leiterplatte des Auslösers, sind aber im fertigmontierten Zustand des Leistungsschalters verdeckt und daher nicht zugänglich. Soll ein Hilfsgerät der genannten Art an die Auslöseeinheit angeschlossen werden, so ist es erforderlich, den Frontteil des Leistungsschalters zu demontieren, um dann die gewünschten Verbindungen herzustellen. Anschließend muß der Schalter wieder zusammengebaut werden.

Ausgehend von einem Leistungsschalter der eingangs genannten Art liegt der Erfindung die Aufgabe zugrunde, den nachträglichen Anschluß eines Hilfsgerätes an den elektronischen Auslöser auch ohne Zerlegung des Leistungsschalters auf einfache Weise vornehmen zu können und zugleich einen angemessenen Berührungsschutz und Schutz der angeschlossenen Leitungen zu gewährleisten.

Diese Aufgabe wird bei einem Leistungsschalter der eingangs genannten Art durch folgende Merkmale gelöst:

a) anschließend an die Öffnung ist auch an einer Seitenfläche des Gehäuses eine Öffnung vorgesehen, die in den Raum zwischen der Deckplatte und der durchscheinend ausgebildeten Schutzplatte mündet;

b) jede Anschlußklemme ist U-förmig ausgebildet, wobei die Schenkel des "U" an der Leiterplatte befestigt und leitend mit dieser verbunden sind und wobei der Mittelteil des "U" mit einer durch die Deckplatte ragenden Klemmschraube versehen ist;

c) es sind zwei Reihen von Anschlußklemmen in paralleler Anordnung derart vorgesehen, daß ihr Zwischenraum über die in der Seitenwand des Gehäuses befindliche Öffnung zur Einführung von Anschlußleitungen zugänglich ist.

Auf diese Weise sind die Anschlußklemmen ständig sichtbar und können leicht überwacht werden. Sie sind ferner durch einfache Abnahme der Schutzplatte zugänglich und gestatten ein bequemes Anschließen der Leitungen. Durch die seitlich angeordneten Öffnung und die Überdeckung der Anschlußklemmen durch die Schutzplatte ist ein Klemmenraum gebildet, der den Endbereich der Leitungen schützt. Auch wird eine Biegung der Leitungen abgefangen und kann nicht unmittelbar auf die Klemmstellen einwirken. Ein weiterer Vorteil besteht darin, daß die Anschlußklemmen zwar oberhalb der Deckplatte liegen, dennoch aber unmittelbar mit der unterhalb der Deckplatte befindlichen Leiterplatte elektrisch leitend verbunden sind.

Die Anordnung der Anschlußklemmen kann noch in der Weise abgewandelt werden, daß eine der beiden Reihen von Anschlußklemmen zur Bildung eines zusätzlichen Zwischenraumes in zwei Gruppen von Anschlußklemmen geteilt sein, wodurch eine gegenüber der zuvor beschriebenen Ausführungsform um 90° gedrehte Klemmenanordnung entsteht.

Die Erfindung wir im folgenden anhand der in den Figuren dargestellten Ausführungsbeispiele näher erläutert.

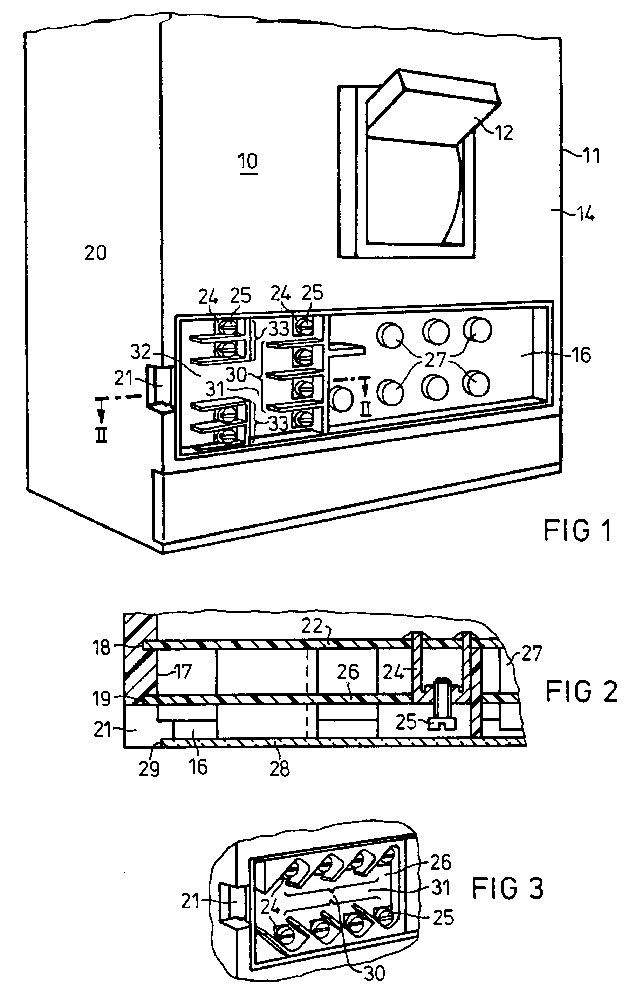

Die Figur 1 zeigt in einer perspektivischen Darstellung einen Teil eines Niederspannungs-Leistungsschalters mit Isolierstoffgehäuse (Bauart MCCB).

Ein teilweise gezeigter Schnitt durch den Leistungsschalter gemäß der Figur 1 entlang der Linie II-II ist in der Figur 2 dargestellt. Die Figur 3 zeigt eine gegenüber der Figur 1 abgewandelte Anordnung von Anschlußklemmen.

Der in der Figur 1 gezeigte Leistungsschalter 10 besitzt ein Gehäuse 11 aus Isolierstoff, aus dessen Frontseite 14 ein Bedienungshandgriff 12 herausragt. Die Frontseite 14 ist ferner mit einer Öffnung 16 versehen, durch die Anschlußklemmen 24 mit Klemmschrauben 25 sowie Einstellorgane 27 zugänglich sind. Die Anschlußklemmen 24 und die Einstellorgane 27 befinden sich auf einer Leiterplatte 22 (Figur 2) und sind Bestandteil einer elektronischen Auslöseeinheit, die in bekannter Weise dazu dient, den Leistungsschalter 10 auszulösen, wenn zuvor festgelegte Werte von Strömen überschritten werden oder sonstige Parameter erfüllt sind.

Wie der Figur 2 näher zu entnehmen ist, ist die Leiterplatte 22 an ihren Rändern in nutenförmigen Ausnehmungen 18 in den Begrenzungsflächen der Öffnung 16 gehalten. Weitere, parallel zu den Ausnehmungen 18 angeordnete, in dem dargestellten Beispiel gleichfalls nutenförmige Ausnehmungen 19 dienen zur Aufnahme einer Abdeckplatte 26, die dazu dient, auf der Leiterplatte 22 befindliche Bauelemente zu schützen und ferner eine Abstützung für die U-förmig ausgebildeten Anschlußklemmen 24 zu bilden. Hierzu ist der Abstand zwischen der Leiterplatte 22 und der Abdeckplatte so bemessen, daß die Abdeckplatte 26 etwa bündig mit dem Mittelteil der Anschlußklemme 24 abschließt, in den eine Klemmschraube 25 eingesetzt ist. Diese Anordnung von Leiterplatte 22 und Abdeckplatte 26 wird nach außen durch eine durchsichtige Schutzplatte 28 abgedeckt, die in zusätzlichen Ausnehmungen 29 am äußeren Rand der Öffnung 16 gehalten ist. Abweichend von den Ausnehmungen 18 und 19 sind die Ausnehmungen 29 als Absatz am Rande der öffnung ausgebildet, so daß die Schutzplatte 28 von außen eingelegt werden kann. Hierbei können die Ausnehmungen so geformt sein daß sich die Schutzplatte 28 einschnappen läßt.

In den Ausführungsbeispielen gemäß der Figur 1 und der Figur 3 sind jeweils insgesamt acht Anschlußklemmen 24 mit Klemmschrauben 25 vorgesehen. Diese sind in dem Beipiel gemäß der Figur 3 in zwei parallen Reihen 30 mit je vier Anschlußklemmen angeordnet, wobei ein zwischen den Reihen bestehender Zwischenraum 31 unmittelbar Verbindung mit einer an einer Seitenfläche 20 des Gehäuses 11 des Leistungsschalters 10 vorgesehenen Öffnung 21 (Figur 1) besitzt. Auf diese Weise kann ein mehradriges Leitungsbündel durch die Öffnung 21 bis in den Zwischenraum 31 geführt werden, und die einzelnen Adern können ohne gegenseitige Kreuzung einzeln an die Anschlußklemmen geführt werden.

Die gleiche bequeme Möglichkeit des Anschlusses bietet die Ausführungsform gemäß der Figur 1, die eine gegenüber der Figur 3 um 90° gedrehte Ausrichtung der Reihen von Anschlußklemmen darstellt, wobei die eine Reihe durch einen zusätzlichen Zwischenraum 32 in zwei Gruppen 33 zu je zwei Anschlußklemmen geteilt ist.

Wie die vorstehende Beschreibung zeigt, bietet die neue Anordnung der Leiterplatte und der Anschlußklemmen die Möglichkeit, Hilfsgeräte mit einem elektronischen Auslöser eines Leistungsschalters zu verbinden, ohne den Schalter außer Betrieb zu nehmen und zerlegen zu müssen. Dies stellt eine wesentliche Erleichterung beim Umbau und bei der Nachrüstung von Schaltgeräten und Schaltanlagen dar. Es ist lediglich erforderlich, die Schutzplatte 28 abzunehmen, um durch die seitliche Öffnung 21 Leitungen zu den Anschlußklemmen 24 zu führen und mit diesen zu verbinden. Anschließend kann die Schutzplatte wieder in die Ausnehmungen 29 eingelegt bzw. eingeschnappt werden. Da sich die Leiterplatte 22 und die Abdeckplatte 26 sowie die Öffnung 21 in dem Frontteil des Gehäuses 11 des Leistungsschalters 10 befinden, ist ein direkter Übergang von der Öffnung 21 zu der Leiterplatte bzw. den Klemmen 24 gewährleistet. Es besteht daher kein Zwischenraum, durch den eine gefahrbringende Berührung spannungführender Teile im Inneren des Leistungsschalters einerseits oder ein Eindringen von Verunreinigungen in das Innere des Leistungsschalters zu befürchten wäre.

## Patentansprüche

1. Leistungsschalter (10) mit einem Isolierstoffgehäuse (11) und einer an einer Frontseite (14) des Gehäuses (11) angeordneten Öffnung (16), durch die eine Leiterplatte (22) zugänglich ist, wobei einander gegenüberliegende Begrenzungsflächen (17) der Öffnung (16) mit je einer Ausnehmung (18) zur Aufnahme der Leiterplatte (22) versehen und in den Begrenzungsflächen der Öffnung (16) in paralleler Anordnung zu den Ausnehmungen (18) weitere Ausnehmungen (19) zur Aufnahme einer Deckplatte (26) angeordnet sind und wobei ferner eine Schutzplatte (28) oberhalb der Deckplatte (26) in zusätzlichen parallel zu den Ausnehmungen (18) angeordneten Ausnehmungen (29) eingesetzt ist, **gekennzeichnet durch** folgende Merkmale:

   a) anschließend an die Öffnung (16) ist auch an einer Seitenfläche (20) des Gehäuses (11) eine Öffnung (21) vorgesehen, die in den Raum zwischen der Deckplatte (26) und der durchscheinend ausgebildeten Schutzplatte (28) mündet;

   b) jede Anschlußklemme (24) ist U-förmig ausgebildet, wobei die Schenkel des "U" an der Leiterplatte (22) befestigt und leitend mit dieser verbunden sind und wobei der Mittelteil des "U" mit einer durch die Deckplatte (26) ragenden Klemmschraube (25) versehen ist;

   c) es sind zwei Reihen (30) von Anschlußklemmen (24) in paralleler Anordnung derart vorgesehen, daß ihr Zwischenraum (31) über die in der Seitenwand (20) des Gehäuses (11) befindliche Öffnung (21) zur Einführung von Anschlußleitungen zugänglich ist.

2. Leistungsschalter nach Anspruch 1, **dadurch gekennzeichnet,** daß die eine der beiden Reihen (30) von Anschlußklemmen (24) zur Bildung eines weiteren Zwischenraumes (32) in zwei Gruppen (33) von Anschlußklemmen (24) geteilt ist.

## Claims

1. Circuit-breaker (10) with a housing (11) of insulating material and an opening (16) arranged at a front side (14) of the housing (11), by means of which opening a printed-circuit board (22) is accessible, whereby mutually opposite boundary surfaces (17) of the opening (16) are each provided with a recess (18) for receiving the printed-circuit board (22) and in the boundary surfaces of the opening (16) in parallel arrangement to the recesses (18) further recesses (19) are arranged for receiving a cover plate (26) and whereby, moreover, a protective plate (28) is placed above the cover plate (26) in additional recesses (29) arranged parallel to the recesses (18), characterized by the following features:
    a) attached to the opening (16) an opening (21) is also provided at a side surface (20) of the housing (11), which opening (21) opens into the space between the cover plate (26) and the protective plate (28) constructed in a transparent manner;
    b) each connection terminal (24) is constructed in a U-shape, whereby the limbs of the "U" are fastened to the printed-circuit board (22) and are connected to the latter in conducting manner and whereby the middle part of the "U" is provided with a clamping screw (25) projecting through the cover plate (26);
    c) two rows (30) of connection terminals (24) are provided in parallel arrangement in such a way that their intermediate space (31) is accessible by means of the opening (21) located in the side wall (20) of the housing (11) for the insertion of connection lines.

2. Circuit-breaker according to claim 1, characterized in that one of the two rows (30) of connection terminals (24) is divided into two groups (33) of connection terminals (24) for the formation of a further intermediate space (32).

## Revendications

1. Interrupteur de puissance (10) comportant un boîtier en matériau isolant (11) et une ouverture (16), qui est ménagée dans une face avant (14) du boîtier (11) et par laquelle on peut accéder à une plaquette à circuits imprimés (22), et dans lequel des surfaces limites réciproquement opposées (17) de l'ouverture (16) comportent chacune un évidement (18) servant à loger la plaquette à circuits imprimés (22), et d'autres évidements (19) servant à loger une plaque de fermeture (26) sont ménagés dans les surfaces limites de l'ouverture (16), dans une disposition parallèle aux évidements (18), et dans lequel en outre une plaque de protection (28) est insérée au-dessus de la plaque de fermeture (26) dans des évidements supplémentaires (29) qui sont disposés parallèlement aux évidements (18), caractérisé par les caractéristiques suivantes :
    a) dans une position adjacente à l'ouverture (16), il est également prévu, dans la surface latérale (20) du boîtier (11), une ouverture (21), qui débouche dans l'espace compris entre la plaque de fermeture (26) et la plaque de protection (28), qui est transparente;
    b) chaque borne de raccordement (24) est réalisée en forme de U, les branches du "U" fixées à la plaquette à circuits imprimés (22) et étant reliées à cette dernière d'une manière conductrice, tandis que la partie médiane du "U" comporte une vis de blocage (25) qui traverse la plaque de fermeture (26);
    c) il est prévu deux rangées (30) de bornes de raccordement (24) disposées parallèlement, de sorte que l'espace intercalaire (31) présent entre ces rangées de bornes, est accessible par l'intermédiaire de l'ouverture (21) ménagée dans la paroi latérale (20) du boîtier (11), pour l'introduction de conducteurs de raccordement.

2. Interrupteur de puissance suivant la revendication 1, caractérisé par le fait que l'une des deux rangées (30) de bornes de raccordement (24) est subdivisée pour former un autre espace intercalaire (32) dans deux groupes (33) de bornes de raccordement (24).

FIG 1

FIG 2

FIG 3